# EUROPEAN PATENT APPLICATION

(11) **EP 4 703 617 A1**
(43) Date of publication of application: **04.03.2026**
(21) Application number: 25199314.3
(22) Date of filing: 01.09.2025
(51) Int. Cl.: F16L 21/06, F16L 55/172

(54) **REMOVABLE CLAMP TIGHTENING PARTS FOR PIPE COUPLING**

(30) Priority: 03.09.2024 US 202418822814
(71) Applicant: Krausz Industries Ltd., 4850001 Rosh HaAyin (IL)
(72) Inventor: Golan, Liron, 4462732 Kfar Sava (IL); Ryvzh, Sergey, 7558305 Rishon LeZion (IL)
(74) Representative: Pearl Cohen UK

(57) **Abstract**

A method of placing a pipe coupling on a pipe is described. The method includes providing a coupling band and a clamping flange that extends from each one of opposing ends of the coupling band, providing removable clamp tightening parts including a set of opposing clamping ears and a fastener assembly, and providing two choices: a first choice in which the removable clamp tightening parts are assembled to the coupling band and the clamping flange before placing the pipe coupling on the pipe, and then tightening the fastener assembly to tighten the pipe coupling around the pipe, and a second choice in which the coupling band and the clamping flange are first placed on the pipe without the removable clamp tightening parts being assembled to the coupling band and the clamping flange, and then afterwards assembling the removable clamp tightening parts to the coupling band and the clamping flange, and then tightening the fastener assembly to tighten the pipe coupling around the pipe.

## Description

### FIELD OF THE INVENTION

The present invention relates generally to pipe couplings (or clamps), and particularly to a pipe coupling with removable clamp tightening parts for tightening the pipe coupling on a pipe.

### BACKGROUND OF THE INVENTION

Many kinds of removable band-type couplings for pipes exist in the art. It is noted that throughout the specification and claims, the term "pipe" encompasses any kind of generally cylindrical object, and the terms "coupling" and "clamp" are used interchangeably.

Such couplings have an elastomeric seal assembly which is tightened to form a watertight seal against the pipe. In general, the pipe coupling includes two opposing clamp members and a set of bolts and nuts which are tightened by means of a wrench. The clamp members are tightened towards each other in a direction transverse to an axial length of the pipe coupling so as to apply a radially-inward clamping force on the pipe or pipes being clamped by the pipe coupling.

The clamp members generally extend a significant amount radially outwards from the pipe coupling. In certain situations, such as in which the coupling is near a wall, ceiling or adjacent pipe, this poses a problem because there is not much room to access the bolts or nuts in order to tighten them.

### SUMMARY

The present invention seeks to provide a pipe coupling with removable clamp tightening parts for tightening the pipe coupling on a pipe, as described in detail below. With the present invention, the pipe coupling may be supplied fully assembled, with the tightening parts assembled to the rest of the coupling. The user then has the choice whether to leave the tightening parts assembled to the rest of the coupling (in which case the pipe coupling is assembled onto the pipe or pipes which need to be repaired just like any other repair coupling), or to first remove the tightening parts from the sleeve or band of the pipe coupling, in which case the sleeve or band can be easily slid over the pipes or pipes to be repaired even in situations with little space left between the coupling and neighboring objects. After the sleeve or band is positioned at the correct place at the site of the repair to be made, the tightening parts can be assembled on the sleeve or band so they face the user and are easily accessible, and then the user tightens the sleeve or band around the pipe or pipes to complete the repair.

There is provided in accordance with a non-limiting embodiment of the invention a method of placing a pipe coupling on a pipe, including providing a coupling band suitable for an elastomeric seal to be disposed inside the coupling band, wherein a clamping flange extends from each one of opposing ends of the coupling band, providing removable clamp tightening parts including a set of opposing clamping ears and a fastener assembly, and providing two choices:
a first choice in which the removable clamp tightening parts are assembled to the coupling band and the clamping flange before placing the pipe coupling on the pipe, and then tightening the fastener assembly to tighten the pipe coupling around the pipe, and
a second choice in which the coupling band and the clamping flange are first placed on the pipe without the removable clamp tightening parts being assembled to the coupling band and the clamping flange, and then afterwards assembling the removable clamp tightening parts to the coupling band and the clamping flange, and then tightening the fastener assembly to tighten the pipe coupling around the pipe.

In accordance with a non-limiting embodiment of the invention, in the second choice, the coupling band is moved on the pipe so when the removable clamp tightening parts are assembled to the coupling band and the clamping flange, the removable clamp tightening parts face a user and are easily accessible.

In accordance with a non-limiting embodiment of the invention, in the second choice, the removable clamp tightening parts are assembled to the coupling band and the clamping flange manually without any tools.

In accordance with a non-limiting embodiment of the invention, in the second choice, the removable clamp tightening parts are assembled to the coupling band and the clamping flange by sliding the clamping ears on to the clamping flange.

In accordance with a non-limiting embodiment of the invention the clamping ears include lugs each of which is formed with a notch, and a portion of each of the clamping flanges slides in the notch.

### BRIEF DESCRIPTION OF DRAWINGS

The present invention will be understood and appreciated more fully from the following detailed description, taken in conjunction with the drawings in which:
Fig. 1A is a simplified perspective illustration of a pipe coupling with removable clamp tightening parts, in accordance with a non-limiting embodiment of the invention, in which the removable clamp tightening parts have been removed from the coupling.
Fig. 1B is a simplified perspective illustration of the pipe coupling of Fig. 1A, in which the removable clamp tightening parts have been assembled with the coupling.
Fig. 1C is a simplified end view of the fully assembled pipe coupling of Fig. 1B.
Fig. 2A is a simplified perspective illustration of a pipe coupling with removable clamp tightening parts, in accordance with another non-limiting embodiment of the invention, in which the removable clamp tightening parts have been removed from the coupling.
Fig. 2B is a simplified perspective illustration of the pipe coupling of Fig. 2A, in which the removable clamp tightening parts have been assembled with the coupling.
Fig. 2C is a simplified end view of the fully assembled pipe coupling of Fig. 2B.

### DETAILED DESCRIPTION

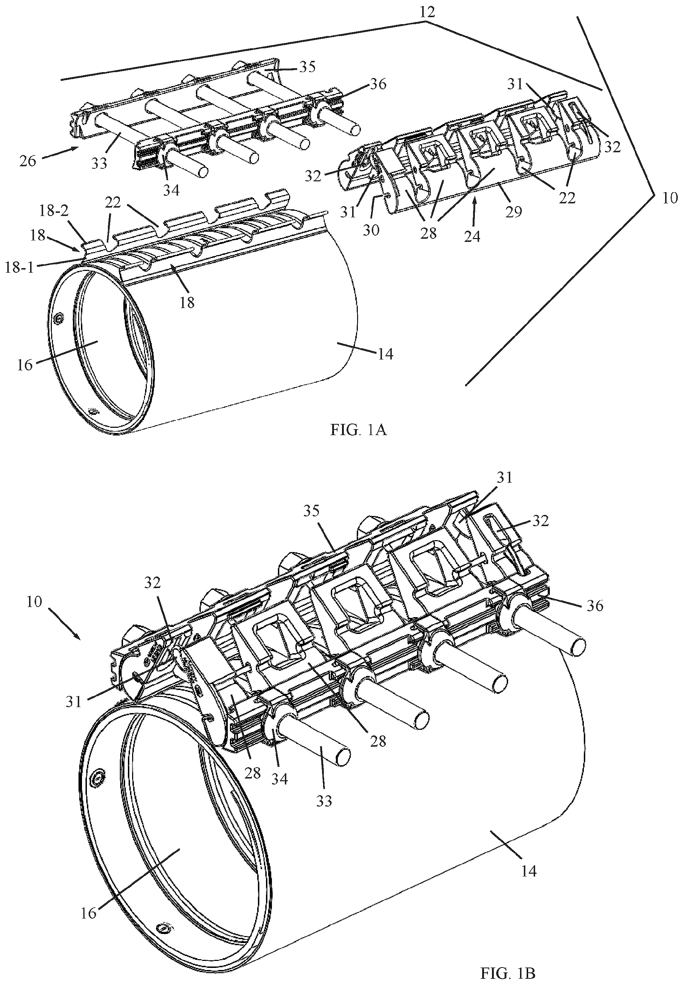

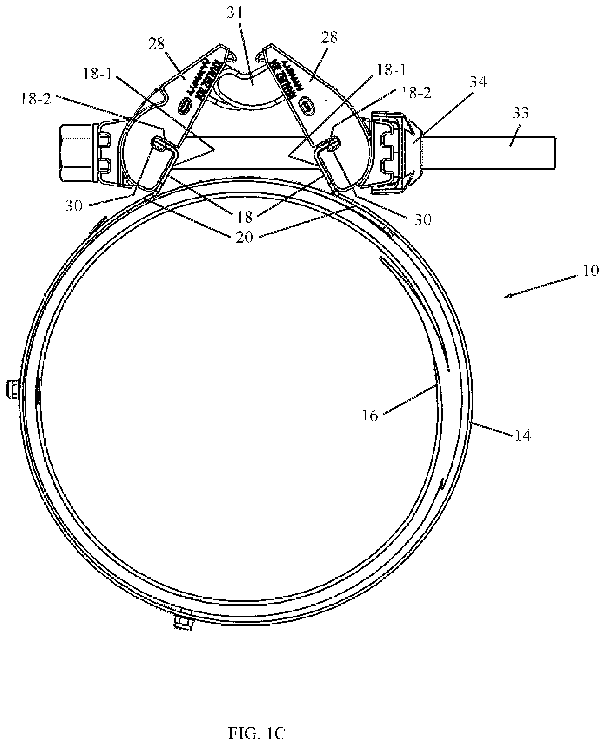

Reference is now made to Figs. 1A, 1B, and 1C, which illustrate a pipe coupling 10 with removable clamp tightening parts 12, in accordance with a non-limiting embodiment of the invention.

Pipe coupling 10 may include a coupling band 14, which without limitation, may be made of stainless steel or any other suitable material. An elastomeric seal 16 may be disposed inside coupling band 14.

A clamping flange 18 may extend from each one of opposing ends 20 (see Fig. 1C) of coupling band 14. The clamping flanges 18, without limitation, may be made of stainless steel or any other suitable material. The clamping flanges 18 may be secured to coupling band 14 by welding, riveting, or any other suitable joining method, or may be made as one unitary piece with band 14.

As seen in Figs. 1A and 1C, each clamping flange 18 may include a first portion 18-1 that extends away from coupling band 14, for example, at a first tilted angle such that the two first portions of the clamping flanges are directed towards each other. Each clamping flange 18 may include a second portion 18-2 that extends from the first portion 18-1 at a second tilted angle oppositely-directed to the first tilted angle such that the two second portions of the clamping flanges are directed away from each other. Each clamping flange 18 may include cutouts 22 (Fig. 1A) spaced from each other along the length of the clamping flange 18.

Each clamping flange 18 preferably extends along the full axial length of coupling band 14.

As seen in Fig. 1A, the removable clamp tightening parts 12 may include a set of opposing clamping ears 24 and a fastener assembly 26. Each clamping ear 24 may include a plurality of lugs 28 which may extend from a common base 29. Each lug 28 includes a notch 30 configured to receive therein second portion 18-2 when each clamping ear 24 is slid over its respective clamping flange 18 (Fig. 1C). One of the lugs 28 may include a protrusion 31 aligned with, and receivable in, a corresponding aperture 32 formed in the opposite lug 28.

The fastener assembly 26 may include a plurality of threaded fasteners 33, such as bolts, which are secured by nuts 34. The heads of the threaded fasteners 33 may be held in a first retainer 35 and the nuts 34 may be held in a second retainer 36. The cutouts 22 provide room to place the threaded fasteners 33 on the clamping flange 18.

The pipe coupling 10 may be supplied fully assembled, with the removable clamp tightening parts 12 assembled to the rest of the coupling (as in Fig. 1B). The user then has the choice whether to leave the tightening parts 12 assembled to the rest of the coupling (in which case the pipe coupling is assembled onto the pipe or pipes which need to be repaired just like any other repair coupling), or to first remove the tightening parts 12 from the sleeve or band (that is, coupling band 14) of the pipe coupling, in which case the coupling band 14 can be easily slid over the pipes or pipes to be repaired even in situations with little space left between the coupling and neighboring objects. After the coupling band 14 is positioned at the correct place at the site of the repair to be made, the tightening parts 12 can be assembled on the coupling band 14 by sliding clamping ears 24 over clamping flanges 18, wherein the second portion 18-2 of each clamping flange 18 slides in the notch 30 of each lug 28. The coupling band 14 can be moved by the user so when the tightening parts 12 are assembled on coupling band 14 they face the user and are easily accessible. The user then tightens the coupling band 14 around the pipe or pipes (by tightening the threaded fasteners 33) to complete the repair.

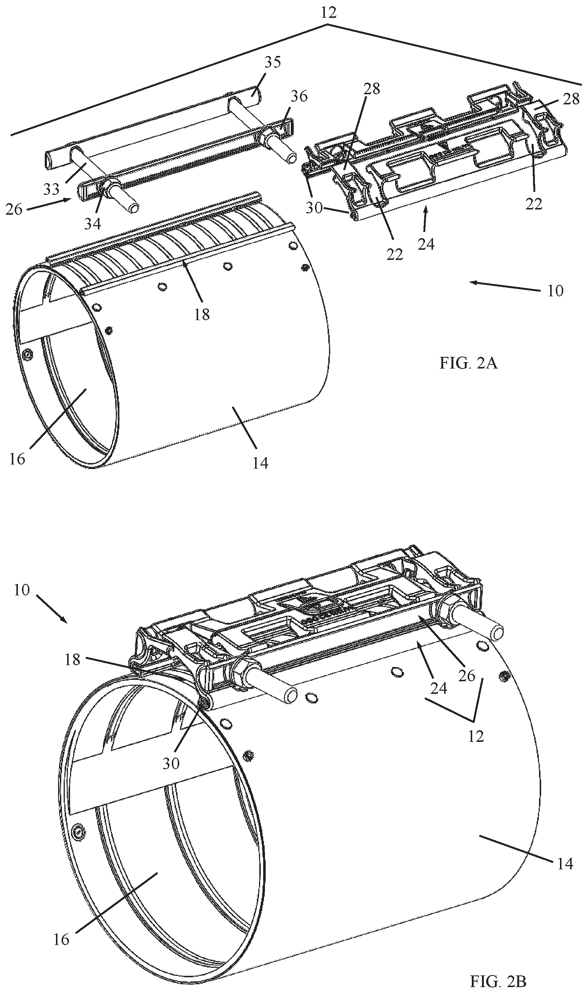

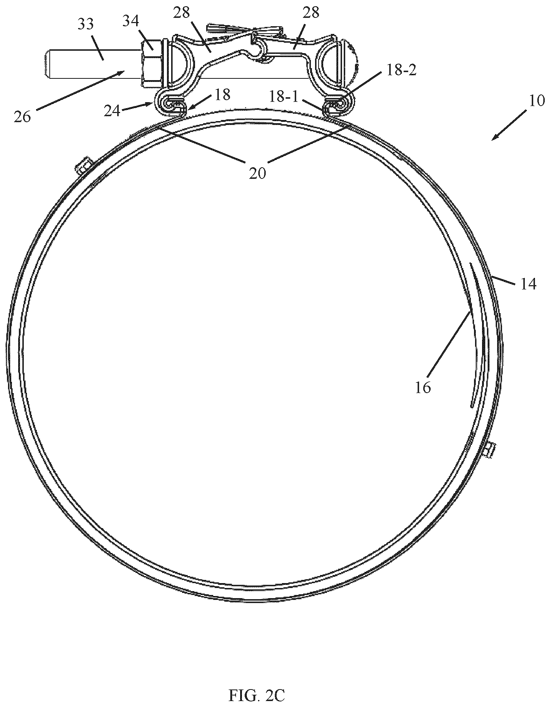

Reference is now made to Figs. 2A, 2B, and 2C, which illustrate a pipe coupling 10 with removable clamp tightening parts 12, in accordance with another non-limiting embodiment of the invention.

The pipe coupling 10 and removable clamp tightening parts 12 are different versions of those shown and described above with reference to Figs. 1A-1C, with like parts being designated by like numerals. The main difference between the embodiment of Figs. 1A-1C and the embodiment of Figs. 2A-2C is in the shapes of the parts. For example, in the embodiment of Figs. 1A-1C, the first portion 18-1 extends away from coupling band 14 at a first tilted angle such that the two first portions of the clamping flanges are directed towards each other. In contrast, in the embodiment of Figs. 2A-2C, the first portion 18-1 extends perpendicularly away from coupling band 14. As another example, clamping ears 24 in the embodiment of Figs. 1A-1C are shaped differently in the embodiment of Figs. 1A-1C.

## Claims

1. A method of placing a pipe coupling on a pipe, comprising:
providing a coupling band suitable for an elastomeric seal to be disposed inside said coupling band, wherein a clamping flange extends from each one of opposing ends of said coupling band;
providing removable clamp tightening parts comprising a set of opposing clamping ears and a fastener assembly; and
providing two choices:
a first choice in which said removable clamp tightening parts are assembled to said coupling band and said clamping flange before placing said pipe coupling on the pipe, and then tightening said fastener assembly to tighten said pipe coupling around the pipe; and
a second choice in which said coupling band and said clamping flange are first placed on the pipe without said removable clamp tightening parts being assembled to said coupling band and said clamping flange, and then afterwards assembling said removable clamp tightening parts to said coupling band and said clamping flange, and then tightening said fastener assembly to tighten said pipe coupling around the pipe.

2. The method according to claim 1, wherein in the second choice, said coupling band is moved on the pipe so when said removable clamp tightening parts are assembled to said coupling band and said clamping flange, said removable clamp tightening parts face a user and are easily accessible.

3. The method according to claim 1, wherein in the second choice, said removable clamp tightening parts are assembled to said coupling band and said clamping flange manually without any tools.

4. The method according to claim 1, wherein in the second choice, said removable clamp tightening parts are assembled to said coupling band and said clamping flange by sliding said clamping ears on to said clamping flange.

5. The method according to claim 4, wherein said clamping ears comprise lugs each of which is formed with a notch, and a portion of each of said clamping flanges slides in said notch.
